# EUROPÄISCHE PATENTANMELDUNG

(11) **EP 0 880 283 A2**
(43) Veröffentlichungstag der Anmeldung: **25.11.1998**
(21) Anmeldenummer: 98440097.8
(22) Anmeldetag: 15.05.1998
(51) Int. Cl.: H04N 7/173

(54) **Server zum Anbieten eines Dienstes**

(30) Priorität: 20.05.1997 DE 19720989
(71) Anmelder: ALCATEL ALSTHOM COMPAGNIE GENERALE D'ELECTRICITE (abrégé: ALCATEL ALSTHOM), 75382 Paris Cédex 08 (FR)
(72) Erfinder: Klumpp, Dieter, Dr., 70193 Stuttgart (DE)
(74) Vertreter: Schätzle, Albin, Dipl.-Phys.

(57) **Zusammenfassung**

Ein Server ( SER ) beinhaltet eine Empfangseinrichtung ( EMP ), um telemetrisch über ein Telekommunikationsnetz ( NET ) übertragene Signale von Kunden, beinhaltend Anweisungen von Kunden zur Zusammenstellung von Bildsequenzen aus mehreren unterschiedlichen, bekannten Bildsequenzen aus wenigstens einem Bildinformationsblock, zu empfangen. Die bekannten Bildsequenzen sind beispielsweise Videofilme, die der Kunde mit seiner Camcorder selbst aufgezeichnet und zum Server (SER ) übertragen hat. Bekannte Bildinformationsblöcke können auch Teile eines mehrteiligen Fernsehfilms sein. Die Anweisungen eines Kunden, die z.B. das Editieren des eigenen Videofilms betreffen, werden zu einer Bearbeitungseinrichtung ( EIN ) übertragen, die geeignet ist, die Anweisungen auszuführen. Die zusammengestellten Bildsequenzen werden einer Speichereinheit ( MEMO ) zugeführt, in der sie abgespeichert werden. Es ist ferner eine Sendeeinrichtung ( SEN ) vorgesehen, um die abgespeicherten Bildsequenzen zu übertragen, z.B. über ein Telekommunikationsnetz zu einem Kunden oder zu einem Videorekorder zum Überspielen des zusammengestellten Videofilms auf eine Videokassette.

## Beschreibung

Die Erfindung bezieht sich auf einen Server zum Anbieten eines Dienstes für eine Vielzahl von Kunden gemäß dem Oberbegriff des Patentanspruchs 1.

Server zum Anbieten der Dienste "Near Video-on-demand" ( NVOD, Video fast auf Abruf) und "Video-on-demand" (VOD, Video auf Abruf) sind beispielsweise aus der Zeitschrift ntz, Heft 3/1995, Seiten 18 bis 25 bekannt. Kunden wählen aus einem Programmangebot von Bildinformationsblöcken, zumeist Videofilmen, die in einer Speichereinheit im Server abgespeichert sind, einen Bildinformationsblock aus, der dem entsprechenden Kunden unverzüglich übertragen wird (VOD) oder zu dem der entsprechende Kunde sich zum nächsten durch den Diensteanbieter fest vorgegebenen Zeitpunkt zuschalten kann (NVOD). Der Kunde ist daher auf das Programmangebot des Diensteanbieters und folglich auf eine Auswahl aus diesem Programmangebot beschränkt sowie im Falle des NVOD auch auf den Zeitpunkt der Übertragung.

Aus EP 0240794 A2 ist eine Videobearbeitungseinrichtung bekannt. Die Videobearbeitungseinrichtung ist eine teure und voluminöse Einrichtung, mittels derer auf Videobändern abgespeicherte Bildsequenzen bearbeitet werden können, was auch als editieren bezeichnet wird. Dazu gehört das Schneiden, Zusammenfügen, Überspielen von Bildsequenzen, um z.B. von verschiedenen Kameras aufgenommene Bildsequenzen in richtiger Reihenfolge unter Auswahl der gelungensten Einstellungen zu einem Bildinformationsblock, also z.B. einen qualitativ hochwertigen Videofilm, der als Vorlage für einen Kinofilm dient, zusammenzusetzen. Ein Kunde, der Bildsequenzen auf Videobänder aufgenommen hat, muß diese Videobänder zum Ort der Videobearbeitungseinrichtung transportieren lassen und auf die Übermittlung des zusammensetzten Videofilms warten. Will er nicht selbst zum Ort der Videobearbeitungseinrichtung fahren, so hat der Kunde wenig Einfluß auf die Zusammensetzung des Videofilms.

Bei einem erfindungsgemäßen Server gemäß Patentanspruch 1, der die oben beschriebenen Nachteile vermeidet, ist eine Empfangseinrichtung vorgesehen, um telemetrisch über ein Telekommunikationsnetz übertragene Signale von Kunden, beinhaltend Anweisungen von Kunden zur Zusammenstellung von Bildsequenzen aus mehreren unterschiedlichen, bekannten Bildsequenzen aus wenigstens einem Bildinformationsblock, zu empfangen und zu einer Bearbeitungseinrichtung zu übertragen, die geeignet ist, die Anweisungen auszuführen und von der aus die zusammengestellten Bildsequenzen einer Speichereinheit zugeführt werden, in der sie abgespeichert werden, und eine Sendeeinrichtung vorgesehen, um die abgespeicherten Bildsequenzen zu übertragen.

Durch einen solchen Server können Kunden, z.B. Privatkunden, die eigene Videofilme mit einem Camcorder aufgenommen haben, z.B. während des Urlaubs, telemetrisch ihre Videofilme editieren. So können sie z.B. vewackelte Szenen herausschneiden, die Chronologie der Handlung verändern und somit nach ihren eigenen Wünschen einen Videofilm zusammenstellen, dessen Handlung sie bestimmt haben. Die Kunden können auch bereits vorhandene Bildsequenzen in ihren individuell zusammengestellten Videofilm aufnehmen und haben dadurch noch einen weiteren Freiheitsgrad, der die Attraktivität des Dienstes steigert. Die Kunden brauchen sich keine Videobearbeitungseinrichtung, auch Videoeditierplatz genannt, beschaffen, sondern können z.B. von Zuhause aus über ein Telekommunikationsnetz mit dem Server kommunizieren und auf diese Weise ihren Videofilm telemetrisch zusammenstellen. Ferner ist auf diese Weise für die Kunden eine Zeitersparnis von mehreren Tagen möglich, da sie nicht auf die postale Übersendung ihres Videofilms warten müssen, sondern der zusammengestellte Videofilm ihnen direkt über das Telekommunikationsnetz übertragen werden kann.

Ein weiterer Vorteil des Servers ist, daß Kunden Bestellungen aufgeben können. Im Fernsehprogramm werden beispielsweise des öfteren Fernsehfilme in mehreren Teilen oder Folgen gesendet. Ist ein Kunde zum Zeitpunkt der Aussendung mehrere Teile verhindert oder möchte er nicht zu den vorgeschriebenen Zeiten den Fernsehfilm ansehen oder möchte er den Fernsehfilm am Stück sehen, so kann er dem Server die Anweisung geben, z.B. bei einem Fernsehfilm mit drei Teilen, alle drei Teile für ihn aufzuzeichnen und abzuspeichern, damit der Kunde zu einem von ihm zu bestimmenden Zeitpunkt den Fernsehfilm in gesamter Länge am Stück ansehen kann. Die Bearbeitungseinrichtung des Servers ist dann beispielsweise eine Datenverwaltung, auch als Management bezeichnet. Ferner kann der Server vom Kunden auch angewiesen werden, einen Videofilm zusammenzustellen, der beispielsweise keine Werbeblöcke enthält. Auf diese Weise kann der Kunde zu einem späteren Zeitpunkt den von ihm ausgewählten Film ohne Werbeunterbrechungen ansehen und/oder z.B. auf seinem Videorekorder selber auf eine Videokassette aufzeichnen.

Bei einer bevorzugten Ausführungsform der Erfindung ist die Bearbeitungseinrichtung des Servers eine Videobearbeitungseinrichtung zum Editieren von Videofilmen mit mehreren Bildsequenzen und die Empfangseinrichtung des Servers geeignet, von Kunden über das Telekommunikationsnetz übertragene Bildsequenzen zu empfangen und zur Videobearbeitungseinrichtung weiterzuleiten. Der Kunde braucht ein zu bearbeitendes Videoband also nicht auf postalischem Wege übermitteln, sondern kann den Inhalt des Videobandes, d.h. die Folge von Bildsequenzen, über ein Telekommunikationsnetz zum Server übertragen. Dies bringt dem Kunden einen Zeitvorteil und eine erhöhte Sicherheit, daß der Bildsequenzen des Videobandes unbeschädigt zum Server gelangen.

Das Telekommunikationsnetz ist z.B. ein Kabelfernsehverteilnetz mit Rückkanal, daß gleichzeitig auch für VOD und/oder NVOD genutzt wird, wobei die Übertragung der Bildsequenzen vom Kunden zum Server über den Rückkanal erfolgt, oder ein diensteintegrierendes digitales Netz, auch als ISDN oder B-ISDN bezeichnet, wobei B Breitband bedeutet, oder ein anderes Netz, wie z.B. ein Fernsprechnetz, Datennetz oder dem sogenannten Internet, oder Gemischen daraus.

In einer weiteren bevorzugten Ausführungsform erfolgt der Empfang der Bildsequenzen über eine breitbandige Verbindung und der Empfang der Anweisungen über eine schmalbandige Verbindung. Dies hat den Vorteil, daß eine teure Übertragung über eine Breitbandverbindung nur für die Übermittlung des zu bearbeitenden Videofilms zum Server genutzt wird, während die telemetrische Bearbeitung des Videofilms, die nur schmalbandige Steuersignale erfordert, über eine kostengünstige schmalbandige Verbindung durchgeführt werden kann.

Ferner können in einer weiteren Ausführungsform Teilbereiche der Speichereinheit des Servers von den Kunden als Archiv für mehrere zusammengestellte Bildsequenzen genutzt werden. Ein Kunde reserviert beispielsweise telemetrisch einen entsprechender Speicherbereich auswählbarer Kapazität in der Speichereinheit, den er daraufhin exklusiv nutzen kann, z.B. um ein eigenes Archiv anzulegen, in dem seine individuellen Videofilme abgespeichert werden und auf das er steten Zugriff hat, z.B. gesichert durch eine Geheimzahl. Damit kann sich der Kunde bei sich Zuhause z.B. ein Regal voller Videokassetten ersparen und sogar ganz auf einen Videorekorder verzichten. Der Kunde kann den Server als ausgelagerten Videorekorder mit angeschlossener Dateiverwaltung benutzen und kann sogar Aufträge vergeben, die der Server für ihn ausführt. Des weiteren hat der Kunde von jedem beliebigen Punkt der Erde Zugriff auf sein Archiv, da nur eine Kundennummer ggf. mit Geheimzahl ausreicht, um dem Kunden den Zugang zum Server zu ermöglichen. Der Kunde ist damit unabhängig vom Standort und kann z.B. von einer sog. Set-Top Box eines Nachbarn oder Freundes aus auf den Server zugreifen und gemeinsam mit dem Nachbarn oder Freund am Wohnort des Nachbarn oder Freundes Videofilme aus seinem Archiv ansehen und wenn gewünscht auch bearbeiten.

Bei einer weiteren bevorzugten Ausführungsform der Erfindung ist die Sendeeinheit des Servers derart gestaltet, daß sie einzelne abgespeicherten Bildsequenzen zu einem oder mehreren vom jeweiligen Kunden telemetrisch ausgewählten Zeitpunkten zu einer oder mehreren vom jeweiligen Kunden telemetrisch ausgewählten Adressen übertragen kann. Möchte der Kunde z.B. nach einer Verabredung mit seinem Freund einen bestimmten Videofilm aus seinem Archiv am Wohnort des Freundes zu einer bestimmten Uhrzeit sehen, so gibt er dies dem Server frühzeitig bekannt, z.B. über eine telefonische Reservierung. Der Server kann seine Gebühren für eine vorab reservierte Übertragung gegenüber eines beliebigen Zugriffs ermäßigen, da er die Auslastung des Netzes dadurch besser vorab planen kann, so daß dem Kunden ein preisgünstigerer Tarif bei einer Vorabreservierung angeboten werden kann.

Wenn in der Bearbeitungseinrichtung Signale einer VPS-Programmierung bearbeitbar sind, so kann auf einfache Art und Weise und unter Ausnutzung bereits bestehender, normierter Steuerzeichen eine Reservierung erfolgen. Die Steuerzeichen für eine VPS-Programmierung, z.B. für einen dreiteiligen Fernsehfilm, können einer Fernsehzeitschrift entnommen werden und damit beispielsweise über einen Videorekorder und eine Set-Top Box zum Server übertragen werden. Eine andere Möglichkeit besteht darin, daß in einem Menue, das vom Server ausgesendet wird und beispielsweise auf dem Fernsehgerät eines Kunden dargestellt und abgerufen werden kann, eine Vorschau von z.B. Fernsehfilmen enthalten ist, von denen mehrere vom Kunden, z.B. über eine Fernbedienung auswählbar sind. Im Server werden die ausgewählten Fernsehfilme in Videorekordern mit einer VPS-Programmierung aufgezeichnet und im Archiv des jeweiligen Kunden abgespeichert.

Im folgenden werden zwei Ausführungsbeispiele der Erfindung unter Zuhilfenahme der Figuren 1 bis 4 erläutert. Es zeigen :
- Fig. 1: ein schematische Darstellung eines erfindungsgemäßen Übertragungssystem mit einem Server, einem Telekommunikationsnetz und beispielhaft einer Endstelle eines Kunden,
- Fig. 2: einen schematisch dargestellten Aufbau eines erfindungsgemäßen Servers eines weiteren erfindungsgemäßen Übertragungssystem,
- Fig. 3: einen schematisch dargestellten Aufbau einer Endstelle eines Kunden für das Übertragungssystem aus Fig. 2, und
- Fig. 4: zwei Diagramme, beinhaltend Bildsequenzen.

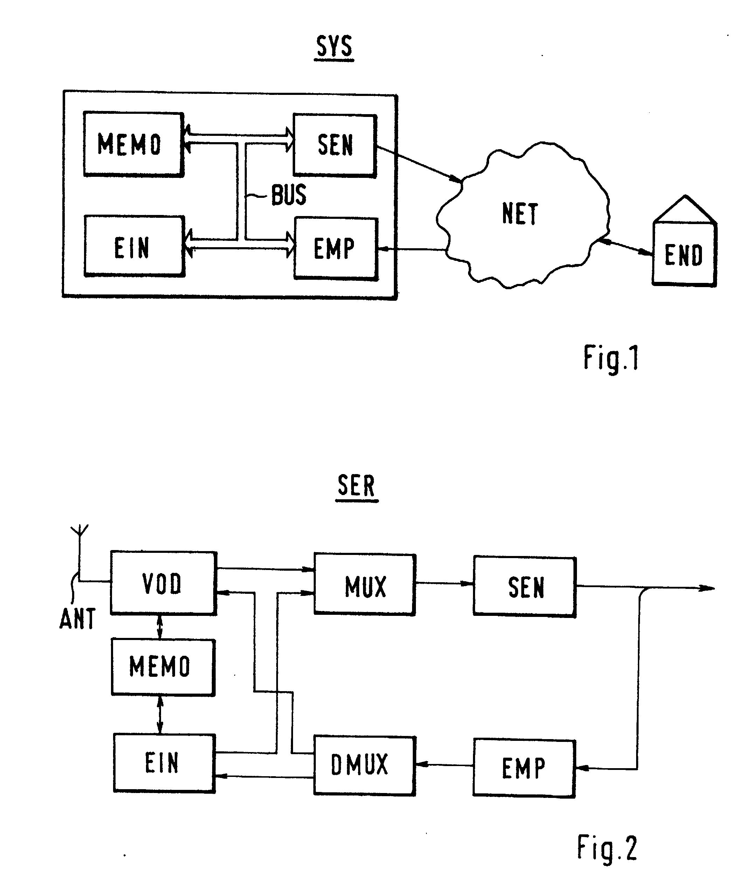

Das erste Ausführungsbeispiel wird nun unter Zuhilfenahme von Fig. 1 erläutert. Fig. 1 zeigt ein erfindungsgemäßes Übertragungssystem SYS mit einem Server SER, einem Telekommunikationsnetz NIET und beispielhaft einer Endstelle END eines Kunden.

Der Server SER beinhaltet eine Empfangseinrichtung EMP, eine Bearbeitungseinrichtung EIN, eine Speichereinheit MEMO und eine Sendeeinrichtung SEN, die über einen internen Bus BUS miteinander verbunden sind. Die Bearbeitungseinrichtung EIN ist beispielsweise eine Datenverwaltung mit einem Mikroprozessor.

Der Server SER dient dazu einer Vielzahl von Kunden einen Dienst anzubieten. Der Dienst besteht darin, jedem Kunden eine, entsprechend den telemetrisch übermittelten Anweisungen des jeweiligen Kunden, Zusammenstellung von Bildsequenzen zur Verfügung zu stellen.

Die Anweisungen eines Kunden werden von einer Endstelle END aus, in der Regel vom Wohnort des Kunden aus, in Form von Signalen über das Telekommunikationsnetz zum Server SER übertragen. Der Kunde baut dazu z.B. über ein Telefon eine Wählverbindung in einem vermittelnden Fernsprechnetz zum Server SER auf, z.B. durch Wahl der Rufnummer des Servers SER. Die Empfangseinrichtung EMP beinhaltet in diesem Fall eine Vielzahl von Telefonanschlüssen und Telefonanlagen, um mit einer Vielzahl von Kunden gleichzeitig eine Wählverbindung aufrechtzuerhalten. Der Kunde gibt nach Aufbau der Wählverbindung z.B. über die Tastatur des Telefons oder eines Computers seine Kundennummer ein, um den Dienst in Anspruch zu nehmen. Die Empfangseinrichtung EMP beinhaltet eine Detektionseinheit zum Erkennen der eingegebenen Kundennummer und zum Vergleich dieser Nummer mit in der Speichereinheit MEMO abgespeicherten Kundennummern. Die Verbindung zum Server SER braucht nur eine schmalbandige Verbindung sein, z.B 64 kbit/s. Der Dienst besteht z.B. darin, daß der Kunde aus einem Programmangebot des Diensteanbieters eine individuelle Auswahl zur Zusammenstellung eines individuellen Videofilms, beinhaltend beispielsweise einen Fernsehfilm aus drei Teilen oder einen selbst zusammengestellten Videofilm aus mehreren Musikvideoclips. Der zusammengestellte Videofilm, der aus einem Bildinformationsblock mit einer Aneinanderreihung mehrerer vom Kunden ausgewählter Bildsequenzen besteht, wird auf der Speichereinheit MEMO, die z.B. einen volladressierbaren Speicher enthält, ein sog. RAM, RAM = Read Access Memory, zwischengespeichert und kann über die Sendeeinrichtung SEN z.B. über ein vom obigen Fernsprechnetz separaten und unabhängigen Kabelfernsehverteilnetz mit einem breitbandigen Vorwärtskanal, z.B. 1 Mbit/s zum Kunden übertragen werden. Alternativ kann der zusammengestellte Videofilm von der Sendeeinrichtung auf einen im Server SER befindlichen, nicht dargestellten Videorekorder überspielt werden, so daß der Videofilm auf einer Videokassette aufgenommen wird, die dem Kunden z.B. auf postalischem Weg zugesandt wird.

Das zweite Ausführungsbeispiel der Erfindung wird im folgenden unter Zuhilfenahme der Figuren 2 bis 4 erläutert. Fig. 2 zeigt einen erfindungsgemäßen Server SER eines weiteren erfindungsgemäßen Übertragungssystems.

Der Server SER beinhaltet eine Empfangseinrichtung EMP, eine Bearbeitungseinrichtung EIN, eine Speichereinheit MEMO und eine Sendeeinrichtung SEN, die miteinander verbunden sind und in ihrem Aufbau den gleichnamigen Elementen aus Fig. 1 entsprechen, bis auf die Bearbeitungseinrichtung EIN, die im zweiten Ausführungsbeispiel eine Videobearbeitungseinrichtung ist, wie sie z.B. aus EP 0240794 A2 bekannt ist.

Der Server SER beinhaltet des weiteren eine Video-on-demand Einrichtung VOD, die aus einem Angebot an in der Speichereinheit MEMO abgespeicherten Videofilmen Videofilme auf Abruf zur Verfügung stellt. Die verfügbaren Videofilme werden z.B. über eine Antenne von einem Fernsehsender empfangen oder über nicht dargestellte Videokassetten und Videorekorder auf die Speichereinheit MEMO überspielt und nach Adressen geordnet abgespeichert. Ein Teil der Speichereinheit MEMO kann auch aus dem Server SER ausgelagert sein. Der Server SER greift dann auf den ausgelagerten Speicherbereich, der auch Teil einer Speichereinheit eines anderen Servers sein kann z.B. über eine breitbandige Glasfaserverbindung im Bedarfsfall zu.

Der Server SER beinhaltet des weiteren eine Multiplexer MUX und einen Demultiplexer DMUX. Der Multiplexer MUX fügt die Signale der Video-on-demand Einrichtung VOD und der Videobearbeitungseinrichtung EIN zusammen und führt sie der Sendeeinrichtung SEN zu, von der aus sie zusammen ins Telekommunikationsnetz übertragen werden. Das Telekom munikationsnetz ist beispielsweise ein Glasfaser/Koaxialkabelnetz in Baumstruktur. Die Sendeeinrichtung SEN beinhaltet einen Elektrisch/Optisch-Umsetzer, um die elektrischen Signale der Video-on-demand Einrichtung VOD und der Videobearbeitungseinrichtung EIN in optische umzusetzen. Die optischen Signale werden bis zu einem optischen Breitbandnetzabschluß übertragen, in dem sie wieder in elektrische Signale umgesetzt werden und anschließend z.B. in ein Koaxialkabelnetz, das auch für Fernsehsignale genutzt wird, eingespeist. Auf diese Weise gelangen sie zu den Endstellen der Kunden. Jeder Kunde kann von einer Endstelle aus breit- und schmalbandige Signale über eine Rückkanal zum Server SER senden. In der Empfangseinrichtung EMP werden diese Signale empfangen, optisch/elektrisch umgesetzt und anscließend zum Demultiplexer DMUX weitergeleitet. Im Demultiplexer DMUX werden die empfangenen Signale aufgeteilt in Signale, die für die Video-on-demand Einrichtung VOD bestimmt sind und in Signale, die für die Videobearbeitungseinrichtung EIN bestimmt sind. Die aufgeteilten Signale werden anschließend den entsprechenden Einrichtungen VOD und EIN zugeführt.

Der neue Dienst besteht nun darin, daß der Kunde einen von ihm erstellten Videofilm über den Rückkanal des Glasfaser/Koaxialkabelnetzes zum Server SER überträgt, um ihn mit Hilfe der Videobearbeitungseinrichtung EIN telemetrisch bearbeiten zu können. Die Übertragung des zu bearbeitenden Videofilms erfolgt über eine breitbandige Verbindung, z.B. 1 Mbit/s. Zur Übertragung der Steuerzeichen für die Bearbeitung ist eine kostengünstigere schmalbandige Verbindung ausreichend, z.B. 64 kbit/s.

Nach Erhalt des Videofilms, wird dieser digitalisiert, wenn er nicht bereits in digitaler Form vorliegt, und in der Speichereinheit MEMO zwischengespeichert. Der digtalisierte/digitale Videofilm wird anschließend in Echtzeit zum Kunden übertragen, der mittels Steuerzeichen z.B. die folgenden Funktionen ausführen kann : Vor- und Zürückspulen, Standbild, Markieren einer Stelle, von der ab geschnitten werden soll, Markieren der Stelle, bis zu der geschnitten werden soll, Auswahl eines Teilbereichs der an einer anderen Stelle eingefügt werden soll, Kopieren von Teilbereichen. Auf diese Weise bearbeitet der Kunde seinen eigenen Videofilm telemetrisch. Das Ergebnis des individuell zusammengestellten Videofilms wird in der Speichereinheit MEMO zwischengespeichert. Der abgespeicherte Videofilm kann dem Kunden über die Sendeeinrichtung SEN und das Glasfaser/Koaxialkabelnetz übertragen werden. Alternativ oder zusätzlich kann der Kunde einen Teilbereich der Speichereinheit MEMO als Archiv reservieren und den zusammengestellten Videofilm vom Server SER in diesem Archiv abspeichern lassen. Auf dieses Archiv hat der Kunde dann uneingeschränkt Zugriff, z.B. über eine Geheimzahl, damit nicht Kunden die Archive anderer Kunden ausnutzen können.

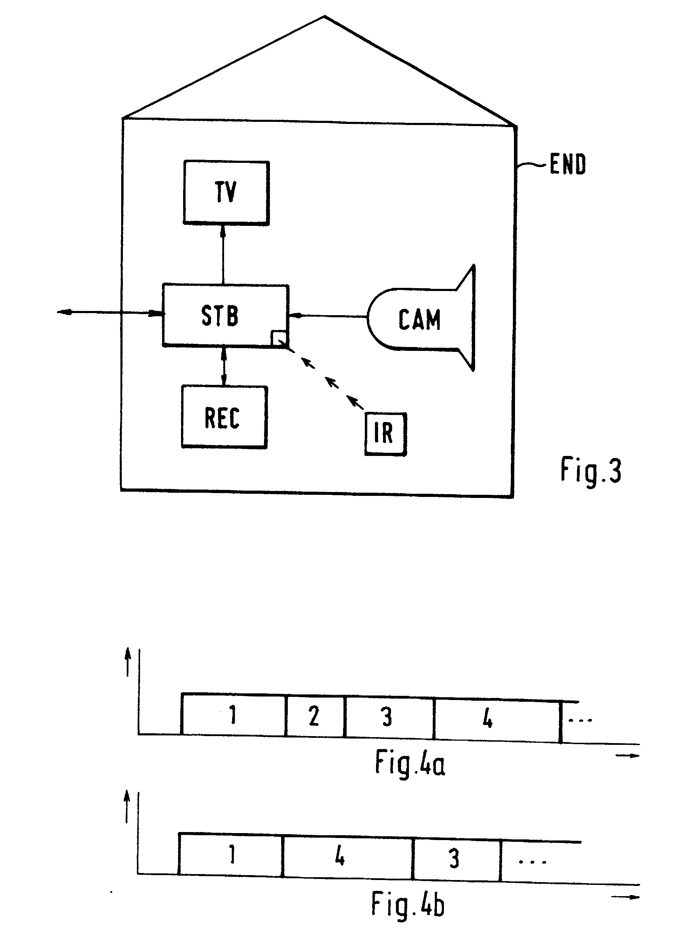

Fig. 3 zeigt eine Endstelle END eines Kunden. Die Endstelle END dient dazu mit dem Server SER zu kommunizieren, um einen seiner Dienste in Anspruch zu nehmen. Die Endstelle END beinhaltet eine sog. Set-Top Box STB, einen Videorekorder REC, ein Fernsehgerät TV und einen Camcorder CAM. Die Set-Top Box STB hat Schnittstellen, um die Set-Top Box STB mit dem Camcorder CAM, den Videorekorder REC und dem Fernsehgerät TV zu verbinden. Ein vom Kunden z.B. über den Camcorder aufgenommener Videofilm wird über den Camcorder CAM und die Set-Top Box STB abgespielt und zum Server aus Fig. 2 übertragen. Dazu ist zunächst eine Verbindung über den Rückkanal des Glasfasr/Koaxialkabelnetzes zum Server aufzubauen. Dies kann über eine Infrarot-Fernbedienung IR geschehen, mittels derer die Set-Top Box STB angesteuert wird. Die nötigen Steuersignale zur Bearbeitung des Videofilms werden auch über die Infrarot-Fernbedienung IR erzeugt. Der vom Server übertragene Videofilm wird auf dem Fernsehgerät TV dargestellt. Das Fernsehgerät TV dient somit als Monitor der telemetrischen Videobearbeitungseinrichtung. Wird der zusammengestellte Videofilm zur Endstelle END übertragen, so kann er im Videorekorder REC auf einer Videokassette aufgezeichnet werden.

Fig. 4 zeigt zwei Diagramme beihaltend Bildsequenzen. Fig. 4a) zeigt einen Ausschnitt aus einem zu bearbeitenden Videofilm eines Kunden, der zum Server übertragen wurde. Der Ausschnitt zeigt vier aufeinanderfolgende Bildsequenzen 1, 2, 3, 4. Fig. 4b) zeigt einen Ausschnitt aus einem auf Anweisung des Kunden zusammengestellten, bearbeiteten Videofilm. Der Ausschnitt zeigt drei aufeinanderfolgende Bildsequenzen 1, 4, 3. Die Bildsequenzen aus Fig. 4a) und b), die gleiche Nummern tragen entsprechen einander. Die Bildsequenz 2 wurde aus dem Videofilm herausgeschnitten, weil sie dem Kunden unbrauchbar erschien; sie war z.B. verwackelt oder paßte thematisch nicht in den Videofilm. Die Bildsequenz 4 wurde auf Anweisung des Kunden zwischen die Bildsequenzen 1 und 3 eingefügt.

Beide Ausführungsbeispiele sind strukturell sehr ähnlich aufgebaut, so daß Teile aus dem ersten Ausführungsbeispiel auch im zweiten verwendet werden könnten, und umgekehrt. So könnte z.B. im zweiten Ausführungsbeispiel anstelle eines Fernsehgerätes ein Monitor eines Computers verwendet werden, und anstelle einer Infrarot-Fernbedienung zur Eingabe der Steuersignale die Tastatur des Computers.

## Patentansprüche

1. Server ( SER ) zum Anbieten eines Dienstes für eine Vielzahl von Kunden, dadurch gekennzeichnet,
daß eine Empfangseinrichtung ( EMP ) vorgesehen ist, um telemetrisch über ein Telekommunikationsnetz (NET) übertragene Signale von Kunden, beinhaltend Anweisungen von Kunden zur Zusammenstellung von Bildsequenzen aus mehreren unterschiedlichen, bekannten Bildsequenzen aus wenigstens einem Bildinformationsblock, zu empfangen und zu einer Bearbeitungseinrichtung ( EIN) zu übertragen, die geeignet ist, die Anweisungen auszuführen und von der aus die zusammengestellten Bildsequenzen einer Speichereinheit (MEMO) zugeführt werden, in der sie abgespeichert werden, und daß eine Sendeeinrichtung ( SEN) vorgesehen ist, um die abgespeicherten Bildsequenzen zu übertragen.

2. Server ( SER ) nach Anspruch 1, dadurch gekennzeichnet, daß die Bearbeitungseinrichtung ( EIN ) eine Videobearbeitungseinrichtung zum Editieren von Videofilmen mit mehreren Bildsequenzen ist, und daß die Empfangseinrichtung ( EMP ) geeignet ist, von Kunden über das Telekommunikationsnetz (NET) übertragene Bildsequenzen zu empfangen und zur Videobearbeitungseinrichtung weiterzuleiten.

3. Server ( SER ) nach Anspruch 2, dadurch gekennzeichnet, daß der Empfang der Bildsequenzen über eine breitbandige Verbindung und der Empfang der Anweisungen über eine schmalbandige Verbindung erfolgt.

4. Server ( SER ) nach einem der vorherigen Ansprüche, dadurch gekennzeichnet, daß Teilbereiche der Speichereinheit (MEMO) von den Kunden als Archiv für mehrere zusammengestellte Bildsequenzen nutzbar ist, indem ein entsprechender Speicherbereich auswählbarer Kapazität in der Speichereinheit ( MEMO ) vom Kunden telemetrisch reservierbar ist.

5. Server ( SER ) nach einem der vorherigen Ansprüche, dadurch gekennzeichnet, daß die Sendeeinheit ( SEN ) derart gestaltet ist, daß sie einzelne abgespeicherten Bildsequenzen zu einem vom jeweiligen Kunden telemetrisch ausgewählten Zeitpunkten zu einer vom jeweiligen Kunden telemetrisch ausgewählten Adresse übertragen kann.

6. Server ( SER ) nach Anspruch 1, dadurch gekennzeichnet, daß in der Bearbeitungseinrichtung ( EIN ) Signale einer VPS-Programmierung bearbeitbar sind.
